# EUROPÄISCHE PATENTSCHRIFT

(11) **EP 2 382 028 B1**
(45) Veröffentlichungstag und Bekanntmachung des Hinweises auf die Patenterteilung: **09.05.2018**
(21) Anmeldenummer: 09763886.0
(22) Anmeldetag: 05.11.2009
(51) Int. Cl.: B01D 53/14, B01D 53/62

(54) **VERFAHREN ZUM ABTRENNEN VON KOHLENDIOXID AUS EINEM ABGAS EINER FOSSILBEFEUERTEN KRAFTWERKSANLAGE**
METHOD FOR SEPARATING CARBON DIOXIDE FROM AN EXHAUST GAS OF A FOSSIL FIRED POWER PLANT
PROCÉDÉDE SÉPARATION DU DIOXYDE DE CARBONE CONTENU DANS UN GAZ D'ÉCHAPPEMENT D'UNE CENTRALE ÉLECTRIQUE À COMBUSTIBLE FOSSILE

(30) Priorität: 28.01.2009 DE 102009006314
(43) Veröffentlichungstag der Anmeldung: 02.11.2011
(73) Patentinhaber: Siemens Aktiengesellschaft, 80333 München (DE)
(72) Erfinder: RICHTER, Peter, 65529 Waldems (DE); SCHNEIDER, Rüdiger, 65817 Eppstein (DE); SCHRAMM, Henning, 60596 Frankfurt am Main (DE)
(86) Internationale Anmeldenummer: PCT/EP2009/064699
(87) Internationale Veröffentlichungsnummer: WO 2010/086039

(56) Entgegenhaltungen:
- EP-A1- 0 012 986
- EP-A1- 1 736 231
- EP-A2- 1 688 173
- EP-A2- 1 688 173
- GB-A- 899 611
- GB-A- 1 484 050
- US-A- 3 563 695
- US-A- 3 823 222
- US-A- 3 962 404
- US-A- 4 073 863
- US-A- 4 152 217
- US-A- 4 160 810
- US-A1- 2006 032 377

## Beschreibung

Die Erfindung betrifft ein Verfahren zum Betreiben einer fossilbefeuerten Kraftwerksanlage und insbesondere ein Verfahren zum Abtrennen von Kohlendioxid aus einem Abgas einer fossilbefeuerten Kraftwerksanlage.

Bei fossilbefeuerten Kraftwerksanlagen zur Erzeugung elektrischer Energie entsteht durch die Verbrennung eines fossilen Brennstoffes ein kohlendioxidhaltiges Abgas. Dieses Produkt wird in der Regel in die Atmosphäre entlassen. Das sich in der Atmosphäre ansammelnde Kohlendioxid behindert die Wärmeabstrahlung unserer Erde und führt dabei durch den so genannten Treibhauseffekt zu einer Erhöhung der Erdoberflächentemperatur. Um eine Reduzierung der Kohlendioxid-Emission bei fossilbefeuerten Kraftwerksanlagen zu erreichen, kann Kohlendioxid aus dem Abgas abgetrennt werden.

Zur Abtrennung von Kohlendioxid aus einem Gasgemisch sind allgemein verschiedene Methoden bekannt. Insbesondere zum Abtrennen von Kohlendioxid aus einem Abgas nach einem Verbrennungsprozess ist die Methode der Absorption-Desorption gebräuchlich.

In großtechnischem Maßstab wird das beschriebene Abtrennen von Kohlendioxid mit dem Absorptions-Desorptionsverfahren mit einem Waschmittel durchgeführt. In einem klassischen Absorptions-Desorptions-Prozess wird das Abgas in einer Absorptionskolonne mit einem selektiven Lösungsmittel als Waschmittel in Kontakt gebracht. Dabei erfolgt die Aufnahme von Kohlendioxid durch einen chemischen oder physikalischen Prozess. Das gereinigte Abgas wird für eine weitere Verarbeitung oder Austragung aus der Absorptionskolonne ausgelassen. Das mit Kohlendioxid beladene Lösungsmittel wird zur Abtrennung des Kohlendioxids und Regenerierung des Lösungsmittels in eine Desorptionskolonne geleitet. Die Abtrennung in der Desorptionskolonne kann thermisch erfolgen. Dabei wird das beladene Lösungsmittel erwärmt, wobei ein Gas- Dampfgemisch aus gasförmigem Kohlendioxid und verdampften Lösungsmittel entsteht - der so genannte Brüdendampf. Das verdampfte Lösungsmittel wird anschließend vom Kohlendioxid separiert. Das Kohlendioxid kann nun in mehreren Stufen verdichtet und gekühlt werden. In flüssigem oder gefrorenem Zustand kann das Kohlendioxid dann einer Lagerung oder Verwertung zugeführt werden. Das regenerierte Lösungsmittel wird erneut zur Absorberkolonne geleitet, wo es wieder Kohlendioxid aus dem kohlendioxidhaltigen Abgas aufnehmen kann.

Das Hauptproblem bei den existierenden Verfahren zum Abtrennen von Kohlendioxid aus einem Abgas ist insbesondere der sehr hohe Energieaufwand, der in Form von Heizenergie für die Desorption benötigt wird. Im Stand der Technik sind dazu bislang keine brauchbaren Verbesserungen zu finden, die den Energieaufwand einer in einen Kraftwerksprozess integrierten Abscheideanlage zur Abtrennung von Kohlendioxid in ausreichendem Maße reduziert.

In der Chemischen Industrie sind zur Einsparung von Heizenergie im Desorptionsprozess eine Vielzahl erweiterte Verschaltungen bekannt. So ist in der EP0133208 ein Verfahren zur Unterstützung der Regeneration des Absorptionsmittels im Desorber gezeigt, das so genannte Lean-Solvent-Flash-Verfahren. Die EP1759756-A1 zeigt das Lean-Solvent-Reheating-Verfahren bei dem der Desorptionsprozess seitlich unterstützt wird. Eine in der DE2817084-C2 offenbarte Verschaltung unterstützt des Absorptionsprozess durch Seitenkühlung. Ein weiteres Verfahren einer erweiterten Verschaltung offenbart die Patentschrift DE1167318 mit dem so genannten Split-Feed-Verfahren. Die EP1736231-A1 offenbart ebenfalls Split-Feed-Verfahren. Bekannte Standardverfahren zu erweiterten Verschaltungen aus der Chemischen Industrie zur Abtrennung von Kohlendioxid aus einem Abgas lassen sich jedoch nicht ohne Weiteres auf andere Anwendungen adaptieren. Gerade bei Integration des Kohlendioxid-Abtrennverfahrens in einen Kraftwerksprozess kann die erweiterte Verschaltung in der Gesamtbilanz im Wirkzusammenhang mit dem Kraftwerksprozess in ihrer Energieeinsparung deutlich gemindert werden, oder sich sogar negativ auswirken. Selbst eine mögliche Senkung des Eigenenergiebedarfs führt nicht zwangsläufig zu einer Steigerung des Gesamtwirkungsgrads. Auch von einem Wirkzusammenhang untereinander ist bei Integration in den Kraftwerksprozess kein günstiger Gesamtwirkungsgrad zu erwarten. Der zusätzliche Aufwand wäre somit nicht wirtschaftlich zu rechtfertigen.

Genereller Nachteil an Abtrennverfahren für Kohlendioxid, die aus dem Stand der Technik bekannt sind, bleibt daher insbesondere der hohe Energieaufwand. Gerade bei Integration des Abtrennverfahrens in eine fossilbefeuerte Kraftwerksanlage führt dies zu einer unerwünschten Verschlechterung des Gesamtwirkungsgrades der fossilbefeuerten Kraftwerksanlage. Selbst bei Erweiterung des Standardverfahrens mit einer bekannten erweiterten Verschaltung aus der Chemischen Industrie kann der Eigenenergiebedarf des Abtrennverfahrens bislang nicht nennenswert gesenkt werden.

Eine Aufgabe der Erfindung besteht darin, ein Verfahren zum Abtrennen von Kohlendioxid aus einem Abgas einer fossilbefeuerten Kraftwerksanlage vorzuschlagen, das eine hohe Abscheideeffizienz, bei niedrigem Eigenenergiebedarf und zugleich günstigem Gesamtanlagenwirkungsgrad des Kraftwerksprozesses ermöglicht.

Eine weitere Aufgabe, die nicht der Erfindung entspricht, ist es, eine fossilbefeuerte Kraftwerksanlage mit einer Abscheidevorrichtung für Kohlendioxid vorzuschlagen, welche eine hohe Abscheideeffizienz bei niedrigem Eigenenergiebedarf und zugleich günstigem Gesamtwirkungsgrad der Kraftwerksanlage ermöglicht.

Die auf ein Verfahren gerichtete Aufgabe ist erfindungsgemäß gelöst mit einem Verfahren zum Abtrennen von Kohlendioxid aus einem Abgas einer fossilbefeuerten Kraftwerksanlage gemäß dem Anspruch 1, bei dem unter anderem in einem Verbrennungsprozess ein fossiler Brennstoff verbrannt wird, wobei ein kohlendioxidhaltiges Abgas erzeugt wird, in einem nachfolgenden Absorptionsprozess das kohlendioxidhaltiges Abgas mit einem Absorptionsmedium in Kontakt gebracht wird, wobei Kohlendioxid von dem Absorptionsmedium aufgenommen wird, wobei ein beladenes Absorptionsmedium und ein gereinigtes Abgas gebildet wird, in einem anschließenden Desorptionsprozess das beladene Absorptionsmedium regeneriert wird, wobei ein regeneriertes Absorptionsmedium gebildet wird, wobei dem Desorptionsprozess das beladene Absorptionsmedium wenigstens in einem ersten Teilstrom und einen zweiten Teilstrom zugeführt wird, und wobei in einem Entspannungsprozess regeneriertes Absorptionsmedium entspannt wird, wobei dampfförmiges Absorptionsmedium gebildet wird, und wobei das dampfförmige Absorptionsmedium in den Desorptionsprozess zurückgeführt wird.

Die Erfindung geht dabei von der Überlegung aus, aus der Chemischen Verfahrenstechnik bekannte Verfahren für die Lösung der Aufgabe heranzuziehen. Aus der Fülle der unterschiedlichen bewährten und ausgereiften Zusatzverschaltungen gilt es Verfahren auszuwählen, die ihre positiven Eigenschaften auch im Wirkzusammenhang untereinander in mit dem Kraftwerksprozess nicht kompensieren oder gar überkompensieren. Kern der Erfindung ist es dabei, die Verfahren derart miteinander zu kombinieren, dass die positiven Auswirkungen der Verfahren weitgehend aufeinander aufgerechnet werden können. Erzielt wird dies erfindungsgemäß durch eine gezielte Kombination des Split-Feed-Verfahrens mit dem Lean-Solvent-Flash-Verfahrens. Überraschenderweise gelangt man gerade bei Kombination dieser beiden Verfahren zu dem Befund, dass der Eigenenergieverbrauch der Abscheidevorrichtung maßgeblich gesenkt werden kann, und zudem der Gesamtwirkungsgrad des Kraftwerksprozesses mit Kohlendioxid-Abscheideanlagen deutlich gesteigert werden kann. Dadurch sind die Kosten für den Kohlendioxidabscheideprozess drastisch gesenkt.

Beim Lean-Solvent-Flash-Verfahren wird die Verdampfung im Sumpf der Desorptionskolonne durch einen Vakuum-Flashbehälter unterstützt. Dabei wird von dem Effekt Gebrauch gemacht, dass die Siedetemperatur des Lösungsmittels bei geringerem Druck absinkt. Die zur Erzeugung des Vakuums im Flashbehälter notwendige elektrische Energie ist im Vergleich zu der eingesparten thermischen Energie für die Verdampfung des Lösungsmittels so gering, dass die Gesamtbilanz positiv ausfällt.

Beim Split-Feed-Verfahren wird der Strom des beladenen Lösungsmittels von der Absorptionskolonne kommend geteilt, und teilweise kalt in den Kopf der Desorptionskolonne eingeleitet. Dadurch wird der sich im Kopf der Desorptionskolonne befindliche Brüdendampf bereits weitgehend kondensiert. Dies entlastet den der Desorptionskolonne nachgeschalteten Kondensator, so dass dieser die Wärme nicht über Kühlwasser nach Außen abführen muss. Die Wärme kann stattdessen direkt zur Aufwärmung des beladenen Lösungsmittels verwendet werden.

Erfindungsgemäß werden diese Verfahren gezielt kombiniert, und in den Kraftwerksprozess integriert. Dazu wird dem Desorptionsprozess beladenes Absorptionsmedium in wenigstens zwei Teilströmen zugeführt. Für die Zuführung in wenigsten zwei Teilströmen ist keine zusätzliche Energie erforderlich. Der erste Teilstrom wird dabei dem Desorptionsprozess an einer Prozessstufe zugeführt, in der im Desorptionsprozess überwiegend Brüdendampf vorliegt. Durch die Beaufschlagung des Brüdendampfes mit beladenem Absorptionsmedium aus dem ersten Teilstrom, kondensiert der Brüdendampf. Dadurch wird der dem Desorptionsprozess nachfolgende Kondensationsprozess entlastet, und elektrische Energie zur Führung von Kühlwasser des Kondensationsprozesses eingespart. Weiterhin wird das zugeführte beladene Absorptionsmedium durch die Kondensation erwärmt und steht dem Desorptionsprozess zur Verfügung. Durch die eingesparte Vorwärmung wird im Desorptionsprozess Heizenergie in Form von Heizdampf eingespart.

Der zweite Teilstrom wird dem Desorptionsprozess an einer Prozessstufe zugeführt, an der er dem Desorptionsprozess direkt zur Verfügung steht. Eine Zuführung von beladenem Absorptionsmedium in mehreren Teilströmen in mehreren Prozessstufen der Desorptionseinheit ist ebenso denkbar.

Das nun den Desorptionsprozess verlassende regenerierte Absorptionsmedium wird nun einem Entspannungsprozess zugeführt, in dem es entspannt wird. Für die Erzeugung von Unterdruck wird elektrische Energie aufgewandt. Durch die Entspannung verdampft ein Teil des Absorptionsmediums. Der Entspannungsprozess trennt somit flüssiges Absorptionsmedium von dampfförmigem Absorptionsmedium. Das dampfförmige Absorptionsmedium wird nun zurück in den Desorptionsprozess geführt. Dadurch unterstützt das zurückgeführte dampfförmige Absorptionsmedium den Desorptionsprozess und führt somit zu einer Einsparung von Heizenergie in Form von Heizdampf. Der eingesparte Heizdampf kann somit im Kraftwerksprozess zur Erzeugung elektrischer Energie verwendet werden.

Die Kombination des Split-Feed-Verfahrens mit dem Lean Solvent Flash-Verfahren beeinflusst sich überraschenderweise nur sehr minimal. So kann ohne erhebliche Abzüge der Beitrag zum Eigenenergieverbrauch des Abtrennungsverfahrens der einzelnen Verfahren nahezu addiert werden. Dabei wird die Abscheideeffizienz gesteigert. Besonders überraschend ist dabei, dass sich durch die erfindungsgemäße Kombination der beiden Verfahren auch der Gesamtwirkungsgrad des Kraftwerksprozesses im gleichen Maße erhöht.

In einer vorteilhaften Weiterbildung des Kohlendioxid-Abtrennungsverfahrens wird der erste Teilstrom auf eine Temperatur T₁ eingestellt, und der zweite Teilstrom auf eine Temperatur T₂ eingestellt. Dabei ist die Temperatur T₁ niedriger als die Temperatur T₂. Die Temperatur T₁ entspricht dabei in etwa der Temperatur des den Absorptionsprozess verlassenden beladenen Absorptionsmediums. In Abhängigkeit von Betriebsbedingungen des Desorptionsprozesses kann auch die Einstellung der Temperatur T₁ auf eine andere Temperatur erforderlich sein. Die Einstellung der Temperaturen kann durch einen Regelprozess erfolgen. In Abhängigkeit von der im Desorptionsprozess erforderlichen Betriebsbedingungen wird die Temperatur T₁ und die Temperatur T₂ geregelt.

Bei einer weiteren vorteilhaften Ausgestaltung des Kohlendioxid-Abtrennungsverfahrens wird in dem Entspannungsprozess regeneriertes Absorptionsmedium abgeschieden, und in einem Wärmetauscherprozess dem regenerierten Absorptionsmedium Wärme entzogen, und an das beladene Absorptionsmedium im zweiten Teilstrom zugeführt. Dies ermöglicht die Nutzung der noch im regenerierten Absorptionsmedium verbliebenen Wärme, um das beladene Absorptionsmedium im zweiten Teilstrom zu erwärmen. Mit einer Regelung des Wärmetauscherprozesses kann somit gleichzeitig die Einstellung der Temperatur T₂ vorgenommen werden.

Zweckmäßigerweise wird der Entspannungsprozess bei einem Druck P₁, und der Desorptionsprozess bei einem Druck P₂ durchgeführt, wobei der Druck P₁ niedriger eingestellt wird, als der Druck P₂. Durch den geringeren Druck P₁ im Entspannungsprozess wird die Verdampfung des Absorptionsmediums erzielt. Der Druck P₂ kann dabei über Atmosphärendruck liegen, und folglich der Druck P₁ bei einem Druck zwischen Atmosphärendruck und den Druck P₂. In einer besonderen Weiterbildung des Kohlendioxid-Abtrennungsverfahrens wird dabei der Druck P₂ in etwa auf Atmosphärendruck eingestellt. Dies geschieht praktisch dadurch, indem der Desorptionsprozess bei Atmosphärendruck durchgeführt wird. Folglich wird der Druck P₁ auf einen Druck unterhalb des Atmosphärendrucks eingestellt.

Bei dem erfindungsgemäßem Kohlendioxid-Abtrennungsverfahren wird das dampfförmige Absorptionsmedium vor der Rückführung in den Desorptionsprozess verdichtet. Dabei wird der Druck P₁ auf den Druck P₂ angehoben. Ziel der Verdichtung ist die Rückführung des dampfförmigen Absorptionsmediums in den Desorptionsprozess. Die Rückführung erfolgt dabei vorzugsweise im Bereich des Sumpfes. Zweckmäßigerweise wird das beladene Absorptionsmedium dem Absorptionsprozess in einem Gesamtstrom entnommen, wobei der Gesamtstrom in wenigstens den ersten Teilstrom und den zweiten Teilstrom aufgeteilt wird. Die Aufteilung in mehrere Teilströme ist ebenso möglich. Die Aufteilung in den ersten Teilstrom und in den zweiten Teilstrom wird vorzugsweise durch einen Regelprozess gesteuert. Die Regelung erfolgt dabei in Abhängigkeit von im Desorptionsprozess erforderlichen Betriebsbedingungen. Unter einer Teilung ist auch eine Abzweigung oder Teilentnahme zu verstehen. Prinzipiell ist auch die Entnahme von beladenem Absorptionsmedium aus dem Absorptionsprozess in mehreren Teilströmen denkbar. Erfindungsgemäß wird im Desorptionsprozess durch die Regenerierung das beladenen Absorptionsmediums ein Gas-Dampfgemisch aus gasförmigen Kohlendioxid und dampfförmigen Absorptionsmedium gebildet, wobei in einem Kondensationsprozess aus dem Gas- Dampfgemisch Kondensat herauskondensiert wird. Der Kondensationsprozess ist dabei dem Desorptionsprozess nachgeschaltet. Bei dem Gas-Dampfgemisch handelt es sich weitgehend um Brüdendampf. Die Zusammensetzung des Kondensats ist abhängig von dem verwendeten Absorptionsmedium. Bei dem erfindungsgemäßen Verfahren wird weitgehend reines Wasser auskondensiert. Durch das Split-Feed-Verfahren wird der Kondensationsprozess nennenswert entlastet, so dass einerseits weniger Kühlwasser für die Kondensation bereit gestellt werden muss, und andererseits auch weniger Kondensat anfällt.

Vorzugsweise wird eine Lösung aus H₂O und Aminderivaten als Absorptionsmedium verwendet. Gegenüber auf Ammoniak basierenden Absorptionsmedien birgt der Umgang mit einer Lösung aus H₂O und Aminderivaten weniger Risiken und negative Umwelteinflüsse.

Das Verfahren wird vorzugsweise bei einem fossilbefeuerten Dampfkraftwerk oder bei einer kombinierten Gas- und Dampfturbinen-Kraftwerksanlage angewandt.

Die auf eine Vorrichtung gerichtete Aufgabe wird gelöst durch eine fossilbefeuerte Kraftwerksanlage mit einer einer Verbrennungsvorrichtung nachgeschalteten und von einem kohlendioxidhaltigen Abgas durchströmbaren Abscheidevorrichtung für Kohlendioxid, wobei die Abscheidevorrichtung eine Absorptionseinheit zur Aufnahme von Kohlendioxid aus dem kohlendioxidhaltigen Abgas und eine Desorptionseinheit zur Abgabe des aufgenommenen Kohlendioxids aufweist, wobei die Absorptionseinheit mit der Desorptionseinheit zur Durchleitung eines beladenen Absorptionsmediums über eine Verbindungsleitung verbunden ist, wobei die Verbindungsleitung eine erste Teilleitung und eine zweite Teilleitung aufweist, und die erste Teilleitung und die zweite Teilleitung an verschiedenen Anschlussstellen an die Desorptionseinheit angeschlossen sind, und die Desorptionseinheit mit einem Druckbehälter verbunden ist, wobei ein in dem Druckbehälter gebildeter Dampf in die Desorptionseinheit über eine Dampfleitung rückführbar ist.

Die Erfindung geht dabei von der Überlegung aus, die Split-Feed-Verschaltung mit dem Lean-Solvent-Flash miteinander in die Abscheidevorrichtung zu integrieren. Dazu weist die Verbindungsleitung eine erste und eine zweite Teilleitung auf. Weitere Teilleitungen sind möglich. Die erste Teilleitung ist dabei an der Desorptionseinheit an einer anderen Anschlussstelle angeschlossen, als die zweite Teilleitung. Bei einer vertikal aufgestellten Desorptionskolonne sind die Anschlussstellen horizontal voneinander beabstandet. Die horizontale Anordnung der Anschlussstelle kann konstruktionsbedingt variieren. Die Teilleitungen sind für die Durchleitung eines beladenen Absorptionsmediums ausgelegt.

Der Desorptionseinheit nachgeschaltet ist ein Druckbehälter, der über eine geeignete Leitung zur Durchleitung eines regenerierten Absorptionsmediums mit der Desorptionseinheit verbunden ist. Bei dem Druckbehälter handelt es sich um einen so genannten Flash-Behälter, in dem ein Medium verdampft werden kann. Der Druckbehälter ist zudem über eine Rückführleitung für Dampf mit der Desorptionseinheit verbunden.

Die Split-Feed-Verschaltung ist mit dem Lean-Solvent-Flash auf überraschende Weise kombinierbar. Durch den Betrieb der fossilbefeuerten Kraftwerksanlage ist nur ein sehr geringer Einfluss der Beiden Verschaltungen auf einander festzustellen. So kann ohne erhebliche Abzüge der Beitrag zur Verringerung des Eigenenergieverbrauchs des Abtrennungsverfahrens sowie der Beitrag zum Gesamtwirkungsgrad des Kraftwerksprozesses der einzelnen Verfahren addiert werden, und das zudem bei steigender Abscheideeffizienz.

In einer zweckmäßigen Weiterbildung der fossilbefeuerten Kraftwerksanlage ist die Verbindungsleitung an einer Anschlussstelle an die Absorptionseinheit angeschlossen. Ein im Betrieb aus der Absorptionseinheit auszuleitendes Absorptionsmedium wird somit durch die Verbindungsleitung an nur einer Stelle abgeführt. Denkbar sind auch mehrere Anschlussstellen, an denen auszuleitendes Absorptionsmedium abgeführt wird. Die mehreren Anschlussstellen können dabei bei einer vertikal aufgestellten Absorptionskolonne vertikal oder horizontal voneinander beabstandet sein.

Vorzugsweise ist in dem Druckbehälter ein Vakuum einstellbar. Dazu ist der Druckbehälter entsprechend ausgelegt, und umfasst Vakuumpumpe und Druckventile.

In einer besonderen Weiterbildung der fossilbefeuerten Kraftwerksanlage ist ein Wärmetauscher vorgesehen, der primärseitig in die zweite Teilleitung geschaltet ist, und sekundär zuleitend mit dem Druckbehälter und sekundär ableitend mit der Absorptionseinheit verbunden ist. Dadurch lässt sich im Betrieb der fossilbefeuerten Kraftwerksanlage Wärme von einem regenerierten Absorptionsmedium im Druckbehälter auf ein beladenes Absorptionsmedium in der zweiten Teilleitung übertragen. Das regenerierte Absorptionsmedium wird somit für einen erneuten Einsatz in der Absorptionseinheit gekühlt und das beladene Absorptionsmedium für die Regenerierung in der Desorptionseinheit erwärmt.

Bei einer vorteilhaften Ausgestaltung der fossilbefeuerten Kraftwerksanlage ist in die Dampfleitung ein Verdichter geschaltet. Bei dem Verdichter handelt es sich um eine Vorrichtung, durch die ein Dampf aus dem Druckbehälter in die Desorptionseinheit überführbar ist. Der Verdichter ist vorzugsweise eine Vakuumpumpe mit Rückströmventil. Das Rückströmventil verhindert das Rückströmen von Medium aus der Desorptionseinheit in den Druckbehälter.

In einer weiteren vorteilhaften Weiterbildung der Erfindung ist ein Regelventil vorgesehen, dass mit der Verbindungsleitung mit der Absorptionseinheit verbunden ist, und dass mit der ersten Teilleitung und mit der zweiten Teilleitung mit der Desorptionseinheit verbunden ist, so dass im Betrieb ein durch die Verbindungsleitung durchströmendes Absorptionsmedium in einem Verhältnis V auf die erste Teilleitung und die zweite Teilleitung aufteilbar ist. Die Regelung erfolgt dabei in Abhängigkeit von in der Desorptionseinheit erforderlichen Betriebsbedingungen.

Vorzugsweise ist die fossilbefeuerte Kraftwerksanlage als Dampfkraftwerk, umfassend einen befeuerten Kessel und eine Dampfturbine, oder als Gas- und Dampfturbinenanlage, umfassend eine Gasturbine und einen der Gasturbine abgasseitig nachgeschalteten Abhitzedampferzeuger, der in den Wasser-Dampf-Kreislauf einer Dampfturbine geschaltet ist, ausgestaltet.

Folgend werden Ausführungsbeispiele der Erfindung anhand von beigefügten schematischen Zeichnungen näher erläutert. Es zeigt:
FIG 1 Ein Ausführungsbeispiel eines Kohlendioxid-Abtrennungsverfahrens einer fossilbefeuerten Kraftwerksanlage.
FIG 2 Ein Ausführungsbeispiel einer Dampfkraftwerksanlage mit Kohlendioxid-Abscheidevorrichtung.
FIG 3 Ein Ausführungsbeispiel einer Gas- und Dampfturbinenkraftwerksanlage mit einer Kohlendioxid-Abscheidevorrichtung.

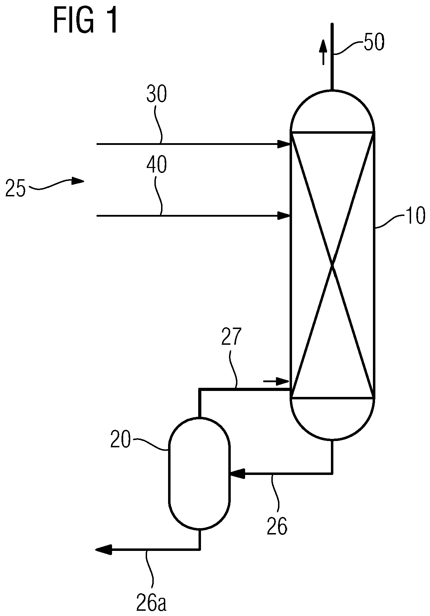

Das in Figur 1 dargestellte Kohlendioxid-Abtrennungsverfahren zeigt im Wesentlichen einen Desorptionsprozess 10 und einen Entspannungsprozess 20.

Beladenes Absorptionsmedium 25 wird dem Desorptionsprozess über einen ersten Teilstrom 30 und einem zweiten Teilstrom 40 zugeführt. Die Zuführung erfolgt an verschiedenen Prozessstufen des Desorptionsprozesses 10. Im Desorptionsprozess 10 wird das beladene Absorptionsmedium 25 regeneriert. Dabei wird ein Gas-Dampfgemisch 50 aus Kohlendioxid und Dampfförmigem Absorptionsmedium gebildet. Den Desorptionsprozess 10 verlassen das Gas-Dampfgemisch 50 und ein regeneriertes Absorptionsmedium 26.

Das regenerierte Absorptionsmedium 26 wird anschließend dem Entspannungsprozess 20 zugeführt. Im Entspannungsprozess 20 wird bei einem Druck, der niedriger ist als der Druck im Desorptionsprozess, dampfförmiges Absorptionsmedium 27 von dem regenerierten Absorptionsmedium 26a abgeschieden. Das regenerierte Absorptionsmedium 26a wird aus dem Entspannungsprozess 20 ausgeleitet und in den Absorptionskreislauf zurückgeführt. Das dampfförmige Absorptionsmedium 27 wird in den Desorptionsprozess zurück geführt.

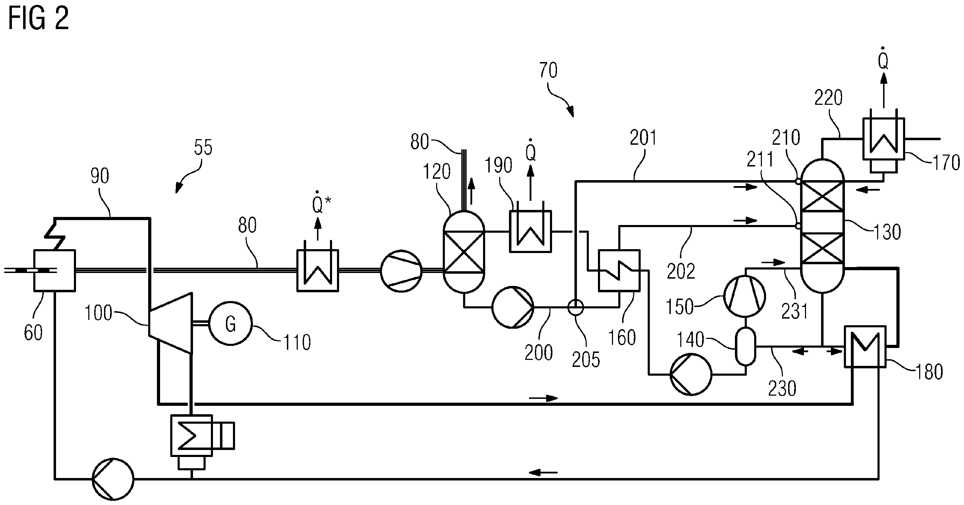

Die in Figur 2 dargestellte Dampfkraftwerksanlage mit integrierter Abscheidevorrichtung für Kohlendioxid umfasst im Wesentlichen einen fossilbefeuerten Dampferzeuger 60, eine dem fossilbefeuerten Dampferzeuger 60 nachgeschaltete Abscheidevorrichtung für Kohlendioxid 70.

Der fossilbefeuerte Dampferzeuger 60 ist zur Ableitung des Abgases über einer Abgasleitung 80 mit der Abscheidevorrichtung 70 verbunden. Zudem ist er in einen Wasser-Dampfkreislauf 90 geschaltet. Über den Wasser-Dampfkreislauf 90 ist der befeuerte Kessel 60 mit einer Dampfturbine 100 verbunden, durch welche einen Generator 110 antreibbar ist.

Die Abscheidevorrichtung 70 besteht aus einer Absorptionseinheit 120, einer Desorptionseinheit 130, einem Druckbehälter 140, einem Verdichter 150, einem Wärmetauscher 160, einem Kondensator 170, einer Heizvorrichtung 180 und einem Wärmetauscher 190.

Die Absorptionseinheit 120 ist in die Abgasleitung 80 geschaltet. In die Abgasleitung 80 können weitere Vorrichtungen geschaltet sein, z.B. Entschwefelungsanlagen oder Gebläse. Zur Leitung eines beladenen Absorptionsmediums ist an die Absorptionseinheit 120 eine Absorptionsmittelleitung 200 angeschlossen. Diese zweigt an einer Aufzweigung 205 in eine erste Teilleitung 201 und eine zweite Teilleitung 202 auf. Mit der Desorptionseinheit 130 verbunden ist die erste Teilleitung 201 an der ersten Anschlussstelle 210 und die zweite Teilleitung 202 an der zweiten Anschlussstelle 211. In die zweite Teilleitung 202 ist primärseitig der Wärmetauscher 160 geschaltet.

Der Desorptionseinheit 130 nachgeschaltet ist ein Kondensator 170, der über eine Kondensatleitung 220 mit der Desorptionseinheit 130 verbunden ist.

Über eine Absorptionsmittelleitung 230 ist die Desorptionseinheit mit der Absorptionseinheit 120 und mit der Heizvorrichtung 180 verbunden. In die Absorptionsmittelleitung 230 ist der Druckbehälter 140 geschaltet. Dieser ist für Unterdruck ausgelegt und mit der Desorptionseinheit 130 über eine Dampfleitung 231 verbunden. In die Dampfleitung 231 ist der Verdichter 150 geschaltet. Nicht dargestellt sind hier weitere Vorrichtungen zur Erzeugung und Regelung des Unterdrucks im Druckbehälter 150. Über die Absorptionsmittelleitung 230 ist die Desorptionseinheit 140 darüber hinaus mit der Heizvorrichtung 180 verbunden.

Die Absorptionsmittelleitung 230 ist sekundärseitig mit dem Wärmetauscher 160 verschaltet, so dass Wärme aus einem in der Absorptionsmittelleitung 230 geführten Absorptionsmedium entnommen, und auf ein in der zweiten Teilleitung 202 geführten Absorptionsmedium übertragbar ist.

Zusätzlich können weitere Vorrichtungen in die Absorptionsmittelleitung 230 geschaltet sein. So z.B. ein Wärmetauscher oder eine Absorptionsmittelpumpe. Die Heizvorrichtung 180 entspricht einem Wärmetauscher und ist in den Wasser-Dampf-Kreislauf 90 geschaltet. Der Wasser-Dampf-Kreislauf 90 kann weitere Vorrichtungen, wie z.B. Kühler oder Pumpen aufweisen.

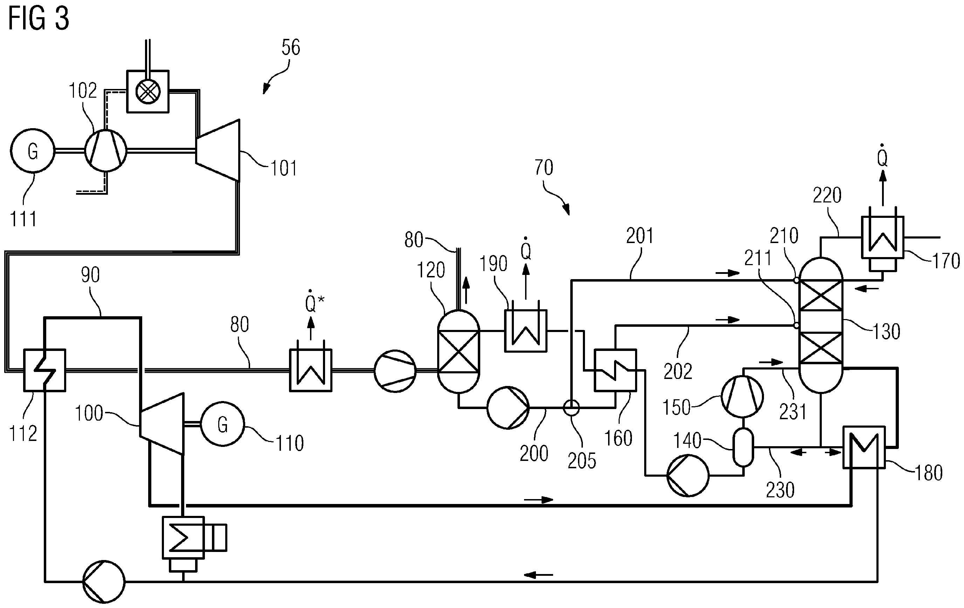

In Figur 3 ist eine Gas- und Dampfturbinenkraftwerksanlage 56 mit integrierter Kohlendioxid-Abscheidevorrichtung 70 dargestellt. Die Gas- und Dampfturbinenkraftwerksanlage 56 umfasst im Wesentlichen eine Gasturbine 101, die über eine Welle einen Prozessverdichter 102 und einen Generator 111 antreibt, einen der Gasturbine 101 abgasseitig nachgeschalteten Abhitzedampferzeuger 112, der durch die Gasturbine 101 befeuert ist und für die Dampferzeugung bereitgestellt ist, eine Dampfturbine 100, die über eine Welle mit einem Generator 110 verbunden ist und die mit einer Dampfleitung mit dem Abhitzedampferzeuger 112 verbunden ist. Der Abhitzedampferzeuger 112 ist abgasleitend mit der Abscheidevorrichtung 70 verbunden. Die nachgeschaltete Abscheidevorrichtung 70 ist im Wesentlichen analog ausgestaltet wie in Figur 2 der Dampfkraftwerksanlage 55.

Die erfindungsgemäßen Vorteile sollen dabei am Beispiel eines mit Bitumen-Kohle befeuerten Kraftwerksprozesses mit 800MW verdeutlicht werden. Bei derartigen fossilen Verbrennungsprozessen entsteht ein Abgas mit ca. 10 bis 15 Volumenprozent Kohlendioxid. Bei einer zu erzielenden Abscheiderate von 90 % des in dem Abgas enthaltenen Kohlendioxids, wird zur Abscheidung einer Tonne CO₂ ein thermischer Energiebedarf von 3,5 GJ/t_{CO2} mit der Standardverschaltung des Kohlendioxid-Abtrennprozesses benötigt. Die Standardverschaltung eines Absorptions-Desorptionsprozesses steht für die folgende Berechnung als Referenz.

Durch den Einsatz des Split-Feed-Verfahrens kann der thermische Energiebedarf zur Abscheidung einer Tonne CO₂ auf 3,1 GJ/t_{CO2} gesenkt werden. Gegenüber der Referenz können dadurch die Einbußen der elektrischen Gesamtleistung um 7,5% reduziert werden. Diese Maßnahme senkt die relativen CO₂-Vermeidungskosten des Abscheideprozesses um 9,9%

Die einzelne Integration des Lean-Solvent-Flash-Verfahrens ermöglicht die Absenkung des Energiebedarfs zur Abscheidung einer Tonne CO₂ auf 2,3 GJ/t_{CO2}. Die Einbußen der elektrischen Gesamtleistung lassen sich dadurch um 9,2% reduzieren, so dass sich die relativen CO₂-Vermeidungskosten des Abscheideprozesses um 8,2% reduzieren.

Durch die Erfindung sind nun die Vorteile der beiden Verfahren nahezu addierbar. So wirkt sich die Kombination der beiden Verfahren nicht negativ auf den Eigenenergiebedarf aus, so dass zur Abscheidung einer Tonne CO₂ in diesem Betriebsbeispiel 2,3 GJ/t_{CO2} benötigt werden. Die Einbußen der elektrischen Gesamtleistung lassen sich um 15% reduzieren und die relativen CO₂-Vermeidungskosten des Abscheideprozesses sogar um 16,9% senken.

Somit kann durch die Erfindung ein Kraftwerksprozess mit integriertem Abscheideprozess für Kohlendioxid bereitgestellt werden, bei dem durch gezielte Kombination des Split-Feed-Verfahrens mit dem Lean-Solvent-Flash-Verfahren eine deutliche Steigerung der produzierten Strommenge des Kraftwerks erzielt werden kann. Dies ist möglich, da der Eigenenergiebedarf des Abscheideprozesses der Kombination überraschenderweise wesentlich geringer ist als der der Einzelverschaltungen. Durch den gleichzeitig geringen Investitionsbedarf können die Kosten für die Kohlendioxidabscheidung drastisch gesenkt werden.

## Patentansprüche

1. Verfahren zum Abtrennen von Kohlendioxid aus einem Abgas einer fossilbefeuerten Kraftwerksanlage (55, 56), bei dem
a) in einem Verbrennungsprozess ein fossiler Brennstoff verbrannt wird, wobei ein kohlendioxidhaltiges Abgas erzeugt wird,
b) in einer Abscheidevorrichtung in einem Absorptionsprozess in einer Absorptionseinheit (120) das kohlendioxidhaltige Abgas mit einem Absorptionsmedium in Kontakt gebracht wird, wobei Kohlendioxid von dem Absorptionsmedium aufgenommen wird, wobei ein beladenes Absorptionsmedium (25) und ein gereinigtes Abgas gebildet wird,
c) in einem Desorptionsprozess (10) in einer Desorptionseinheit (130) das beladene Absorptionsmedium (25) durch Heizenergie in Form von Heizdampf aus dem Kraftwerksanlage (55, 56) über einen Wärmetauscher (180) regeneriert wird, wobei ein regeneriertes Absorptionsmedium (26) gebildet wird, und das der Desorptionseinheit (130) ein Kondensator (170) nachgeschaltet ist, durch den aus dem Gas- Dampfgemisch ein Kondensat herauskondensiert wird,
**dadurch gekennzeichnet, dass**
- das beladene Absorptionsmedium in einen ersten Teilstrom (30) und in einen zweiten Teilstrom (40) aufgeteilt wird, und dem Desorptionsprozess (10) zugeführt wird, wobei der erste Teilstrom (30) der Desorptionseinheit (130) einer Prozessstufe zugeführt wird, in der im Desorptionsprozess (10) überwiegend Brüdendampf vorliegt, sodass der Brüdendampf kondensiert, und wobei die Prozessstufe in der Desorptionseinheit (130) höher liegt, als eine Prozessstufe an welcher der zweite Teilstrom (40) dem Desorptionsprozess zugeführt wird,
- in einem Entspannungsprozess (20) mit einem Druckbehälter (140), der für Unterdruck ausgelegt ist, und dessen Druck P₁ niedriger ist als ein Druck P₂ im Desorptionsprozess (10), regeneriertes Absorptionsmedium aus dem Desorptionseinheit (130) entspannt wird, wobei dampfförmiges Absorptionsmediumgebildet und ein regeneriertes Absorptionsmedium abgeschieden wird, und wobei das dampfförmige Absorptionsmedium (27) in einem Verdichter (150) verdichtet und in den Desorptionsprozess (10) zurückgeführt wird, und das regenerierte Absorptionsmedium über eine Absorptionsmittel-Rückführleitung in den Absorptionsprozess zurück geführt wird, und
- das regenerierte Absorptionsmedium nur mit dem zweiten Teilstrom (40, 202) in einem Wärmetauscher (160) im Wärmetausch geführt wird, um das beladene Absorptionsmedium im zweiten Teilstrom zu erwärmen.

2. Verfahren nach Anspruch 1, bei dem der erste Teilstrom (30) auf eine Temperatur T₁ eingestellt wird, und der zweite Teilstrom (40) auf eine Temperatur T₂ eingestellt wird, wobei die Temperatur T₁ niedriger ist als die Temperatur T₂.

3. Verfahren nach Anspruch 2, bei dem der Druck P₂ in etwa dem Atmosphärendruck entspricht.

4. Verfahren nach einem der Ansprüche 1 bis 3, bei dem eine Lösung aus H₂O und Aminderivaten als Absorptionsmedium verwendet wird.

5. Verfahren nach einem der vorhergehenden Ansprüche, **gekennzeichnet durch** eine Anwendung bei einem fossilbefeuerten Dampfkraftwerksanlage (55).

6. Verfahren nach einem der Ansprüche 1 bis 5, **gekennzeichnet durch** eine Anwendung bei einer kombinierten Gas- und Dampfturbinen-Kraftwerksanlage (56).

## Claims

1. Method for the separation of carbon dioxide from an exhaust gas of a fossil-fired power plant (55, 56), in which
a) a fossil fuel is burnt in a combustion process, an exhaust gas containing carbon dioxide being generated,
b) the exhaust gas containing carbon dioxide is brought into contact with an absorption medium in a separating apparatus in an absorption process in an absorption unit (120), carbon dioxide being taken up by the absorption medium, a laden absorption medium (25) and a purified exhaust gas being formed,
c) the laden absorption medium (25) is regenerated in a desorption process (10) in a desorption unit (130) using heating energy in the form of heating vapour from the power plant (55, 56) via a heat exchanger (180), a regenerated absorption medium (26) being formed, and a condenser (170), which condenses out a condensate from the gas-vapour mixture, is arranged downstream of the desorption unit (130),
**characterized in that**
- the laden absorption medium is divided into a first part stream (30) and into a second part stream (40), and delivered to the desorption process (10), wherein the first part stream (30) of the desorption unit (130) is delivered to a process stage in which, in the desorption process (10), there is predominantly exhaust vapour, so that the exhaust vapour condenses, and wherein the process stage in the desorption unit (130) is higher than a process stage at which the second part stream (40) is delivered to the desorption process,
- in an expansion process (20) with a pressure tank (140) which is configured for vacuum and the pressure P₁ of which is lower than a pressure P₂ in the desorption process (10), regenerated absorption medium from the desorption unit (130) is expanded, wherein vaporous absorption medium is formed and a regenerated absorption medium is separated, and wherein the vaporous absorption medium (27) is compressed in a compressor (150) and is recirculated into the desorption process (10), and the regenerated absorption medium is recirculated via an absorption medium recirculation line into the absorption process, and
- the regenerated absorption medium is made to exchange heat only with the second part stream (40, 202) in a heat exchanger (160) in order to heat the laden absorption medium in the second part stream.

2. Method according to Claim 1, in which the first part stream (30) is set at a temperature T₁ and the second part stream (40) is set at a temperature T₂, the temperature T₁ being lower than the temperature T₂.

3. Method according to Claim 2, in which the pressure P₂ corresponds approximately to the atmospheric pressure.

4. Method according to one of Claims 1 to 3, in which a solution of H₂O and of amine derivatives is used as absorption medium.

5. Method according to one of the preceding claims, **characterized by** use in a fossil-fired steam power plant (55).

6. Method according to one of Claims 1 to 5, **characterized by** use in a combined-cycle power plant (56).

## Revendications

1. Procédé de séparation du dioxyde de carbone d'un gaz d'échappement d'une centrale (55, 56) électrique à combustible fossile, dans lequel
a) dans un processus de combustion, on brûle un combustible fossile en produisant un gaz d'échappement contenant du dioxyde de carbone,
b) dans une installation de séparation, on met, dans un processus d'absorption dans une unité (120) d'absorption, le gaz d'échappement contenant du dioxyde de carbone en contact avec un agent d'absorption, du dioxyde de carbone étant absorbé par l'agent d'absorption, un agent (25) d'absorption chargé et un gaz d'échappement épuré étant formés,
c) dans un processus (10) de désorption, dans une unité (130) de désorption, on régénère, par l'intermédiaire d'un échangeur de chaleur (180), l'agent (25) d'absorption chargé par de l'énergie calorifique sous la forme de vapeur de chauffage provenant de la centrale (55, 56) électrique, un agent (26) d'absorption régénéré étant formé et il est monté, en aval de l'unité (130) de désorption, un condenseur (170) par lequel un condensat est condensé à partir du mélange de gaz et de vapeur,
**caractérisé en ce que**
- on sépare l'agent d'absorption chargé en un premier courant (30) partiel et en un deuxième courant (40) partiel et on l'envoie au processus (10) de désorption, le premier courant (30) partiel de l'unité (130) de désorption étant envoyé à un stade de processus dans lequel il y a, dans le processus (10) de désorption, d'une manière prépondérante, de la vapeur de buée, de sorte que la vapeur de buée est condensée, et dans lequel le stade de processus, dans l'unité (130) de désorption, est plus haut qu'un stade de processus où le deuxième courant (40) partiel est envoyé au processus de désorption,
- dans un processus (20) de détente, on détend, avec un réservoir (140), qui est conçu pour une mise en dépression et dont la pression P₁ est plus basse qu'une pression P₂ dans le processus (10) de désorption, de l'agent d'absorption régénéré de l'unité (130) de désorption, de l'agent d'absorption sous forme de vapeur étant formé et un agent d'absorption régénéré étant séparé et dans lequel l'agent (27) d'absorption sous forme de vapeur est comprimé dans un condenseur (150) et retourné au processus de désorption et l'agent d'absorption régénéré est renvoyé par un conduit de retour d'agent d'absorption au processus d'absorption
et
- l'agent d'absorption régénéré n'est envoyé en échange de chaleur que par le deuxième courant (40, 202) partiel dans un échangeur de chaleur (160) pour chauffer l'agent d'absorption chargé du deuxième courant partiel.

2. Procédé suivant la revendication 1, dans lequel on règle le premier courant (30) partiel à une température T₁ et le deuxième courant (40) partiel à une température T₂, la température T₁ étant plus basse que la température T₂.

3. Procédé suivant la revendication 2, dans lequel la pression P₂ correspond à peu près à la pression atmosphérique.

4. Procédé suivant l'une des revendications 1 à 3, dans lequel on utilise une solution d'H₂O et de dérivés d'amine comme agent d'absorption.

5. Procédé suivant l'une des revendications précédentes, **caractérisé par** une utilisation dans une centrale (55) électrique à vapeur à combustible fossile.

6. Procédé suivant l'une des revendications 1 à 5, **caractérisé par** une utilisation dans une centrale (56) électrique combinée à turbine à gaz et à turbine à vapeur.
